# EUROPEAN PATENT APPLICATION

(11) **EP 4 044 331 A1**
(43) Date of publication of application: **17.08.2022**
(21) Application number: 21816739.3
(22) Date of filing: 22.01.2021
(51) Int. Cl.: H01M 50/116, H01M 10/04

(54) **POUCH-TYPE SECONDARY BATTERY HAVING INCREASED ENERGY DENSITY, AND METHOD FOR MANUFACTURING SAME**

(30) Priority: 04.06.2020 KR 20200067950
(71) Applicant: LG Energy Solution, Ltd., Seoul 07335 (KR)
(72) Inventor: LEE, Han Young, Daejeon 34122 (KR)
(74) Representative: Plasseraud IP
(86) International application number: PCT/KR2021/000880
(87) International publication number: WO 2021/246608

(57) **Abstract**

The present invention relates to a pouch-shaped secondary battery including a stacked type electrode assembly configured to have a structure in which one or more intermediate assemblies are stacked and a case configured to receive the stacked type electrode assembly, wherein the case is configured to have a structure in which the width of a central portion of the case is greater than the width of each of the upper surface and the lower surface of the case, whereby the capacity of the battery is large and heat is easily discharged from the battery, and a method of manufacturing the same.

## Description

### [Technical Field]

This application claims the benefit of priority to Korean Patent Application No. 2020-0067950 filed on June 4, 2020, the disclosure of which is incorporated herein by reference in its entirety.

The present invention relates to a pouch-shaped secondary battery having increased energy density and a method of manufacturing the same, and more particularly to a pouch-shaped secondary battery including a stacked type electrode assembly including two or more intermediate assemblies, each of which is configured to have a structure in which a positive electrode, a separator, and a negative electrode are stacked, and a case configured to receive the stacked type electrode assembly therein, wherein the case is configured to have a structure in which the width of a central portion of the case is greater than the width of each of the upper surface and the lower surface of the case.

### [Background Art]

With recent development of alternative energies due to air pollution and energy depletion caused as the result of use of fossil fuels, demand for secondary batteries capable of storing electrical energy that is produced has increased. The secondary batteries, which are being capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in use of mobile devices, increased complexity of the mobile devices, and development of electric vehicles. In order to satisfy demand of users, a plurality of battery cells is disposed, or pluralities of positive electrodes, separators, and negative electrodes are provided in a single battery cell, in order to increase the capacity of the secondary batteries.

In the case in which a plurality of battery cells is used in a state of being connected to each other or in the case in which the capacity of a single battery cell is large, heat generated in the battery cell may not be discharged, whereby a problem, such as overload, may occur. Particularly, in the case in which the capacity of a single battery cell is large or in the case in which a plurality of battery cells is connected to each other, the temperature of the battery cell may increase due to overload, whereby abnormality of the battery cell may be amplified. In order to solve these problems, a battery module or a battery pack including a plurality of battery cells connected to each other has a cooling unit capable of reducing the temperature of the battery, whereby safety of the battery is improved. A cylindrical secondary battery is configured to have a structure capable of dissipating heat through a case or the upper part of the case.

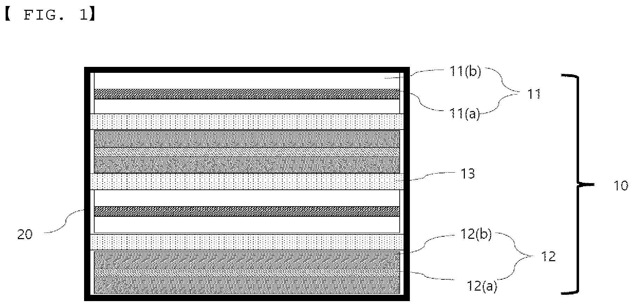

FIG. 1 is a schematic side view of a conventional pouch-shaped secondary battery.

As can be seen from FIG. 1, the conventional pouch-shaped secondary battery has an electrode assembly 10, which includes a positive electrode 11 having a positive electrode current collector 11(a) and a positive electrode active material layer 11(b) applied to one surface or opposite surfaces of the positive electrode current collector 11(a), a negative electrode 12 having a negative electrode current collector 12(a) and a negative electrode active material layer 12(b) applied to one surface or opposite surfaces of the negative electrode current collector 12(a), and a separator 13 disposed between the positive electrode and the negative electrode, received in a case 20.

A receiving portion of the case 20 configured to receive a plurality of electrode assemblies 10 formed so as to have the same size is formed in the shape of a rectangular cuboid corresponding to the size of the electrode assemblies 10.

However, it is difficult for the rectangular-cuboid-shaped case 20 to effectively discharge heat generated in the case 20.

In Patent Document 1, a stack of electrode assemblies having a width gradually increasing toward a middle portion thereof is received in a case having a shape corresponding thereto. Since the electrode assemblies are stacked and are then wrapped using a separation film, however, electrolytic solution impregnability of the electrode assemblies is lowered, whereby the capacity of a battery cell is reduced.

### (Prior Art Document)

(Patent Document 1) Korean Patent Application Publication No. 2014-0062445 (2014.05.23)

### [Disclosure]

### [Technical Problem]

The present invention has been made in view of the above problems, and it is an object of the present invention to provide a pouch-shaped secondary battery configured to have a structure in which a stacked type electrode assembly is received in a case capable of easily discharging heat generated in the case without a separation film, whereby impregnability of an electrolytic solution is high and a heat dissipation effect is excellent.

It is another object of the present invention to provide a construction in which a stacked type electrode assembly in a case is not deformed even when the stacked type electrode assembly is received in the case without a separate separation film.

### [Technical Solution]

In order to accomplish the above objects, a pouch-shaped secondary battery according to the present invention includes a stacked type electrode assembly including two or more intermediate assemblies, each of which is configured to have a structure in which a first electrode, a separator, and a second electrode are stacked, and a case configured to receive the stacked type electrode assembly therein, wherein the case is configured to have a structure in which the width of a central portion of the case is greater than the width of each of the upper surface and the lower surface of the case.

Also, the first electrode may be a single-sided electrode having a first electrode active material applied to only one surface of a current collector, and the second electrode may be a double-sided electrode having a second electrode active material applied to opposite surfaces of a current collector.

Also, each of the intermediate assemblies may be configured to have a structure in which a single-sided electrode/ a separator/ a double-sided electrode/ a separator/ a single-sided electrode are stacked.

An insulation film may be provided between the intermediate assemblies.

Also, the first electrode may be an insulation-coated electrode having a first electrode active material applied to one surface of a current collector and the other surface coated with an insulation material, and the second electrode may be a double-sided electrode having a second electrode active material applied to opposite surfaces of a current collector.

Also, each of the intermediate assemblies may be configured to have a stacked structure in which the surface of the first electrode having the first electrode active material applied thereto faces the second electrode.

Each of the intermediate assemblies may be configured to have a structure in which a 1-1 electrode/ a separator/ a second electrode/ a separator/ a 1-2 electrode are stacked, and each of the 1-1 electrode and the 1-2 electrode may be an insulation-coated electrode.

In addition, each of the intermediate assemblies may be configured to have a structure in which a 1-1 electrode/ a separator/ a second electrode/ a separator/ a 1-2 electrode are stacked, the 1-1 electrode may be an insulation-coated electrode, and the 1-2 electrode may be a single-sided electrode having a first electrode active material applied to only one surface of a first electrode current collector.

The stacked type electrode assembly may be configured such that the intermediate assemblies have different sizes depending on the width of the case.

A method of manufacturing a pouch-shaped secondary battery according to the present invention includes S1) forming an intermediate assembly configured to have a structure in which a first electrode, a separator, and a second electrode are stacked, S2) preparing a case configured to have a structure in which the width of a central portion of the case is greater than a width of each of the upper surface and the lower surface of the case, S3) stacking intermediate assemblies having different widths so as to correspond the width of the case to form a stacked type electrode assembly, and S4) receiving the electrode assembly in the case.

In the method of manufacturing the pouch-shaped secondary battery according to the present invention, the first electrode may be a single-sided electrode having a first electrode active material applied to only one surface of a current collector, and the second electrode may be a double-sided electrode having a second electrode active material applied to opposite surfaces of a current collector.

Also, in step S3) of the method of manufacturing the pouch-shaped secondary battery according to the present invention, an insulation film may be provided between the intermediate assemblies.

Also, the first electrode may be an insulation-coated electrode having a first electrode active material applied to one surface of a current collector and the other surface coated with an insulation material, and the second electrode may be a double-sided electrode having a second electrode active material applied to opposite surfaces of a current collector.

At this time, each of the intermediate assemblies may be configured to have a stacked structure in which the surface of the first electrode having the first electrode active material applied thereto faces the second electrode.

Also, each of the intermediate assemblies may be configured to have a structure in which a 1-1 electrode/ a separator/ a second electrode/ a separator/ a 1-2 electrode are stacked, and each of the 1-1 electrode and the 1-2 electrode may be an insulation-coated electrode.

Furthermore, each of the intermediate assemblies may be configured to have a structure in which a 1-1 electrode/ a separator/ a second electrode/ a separator/ a 1-2 electrode are stacked, the 1-1 electrode may be an insulation-coated electrode, and the 1-2 electrode may be a single-sided electrode having a first electrode active material applied to only one surface of a first electrode current collector.

The present invention provides a battery module or a battery pack including the pouch-shaped secondary battery having one or more constructions that do not conflict with each other, among the above-mentioned features, or provides a device having the pouch-shaped secondary battery mounted therein.

In the present invention, one or more constructions that do not conflict with each other may be selected and combined from among the above constructions.

### [ Description of Drawings]

FIG. 1 is a schematic side view of a conventional pouch-shaped secondary battery.
FIG. 2 is a schematic side view of a pouch-shaped secondary battery according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

In the following description, a first electrode is expressed as a negative electrode, and a second electrode is expressed as a positive electrode. Accordingly, a first electrode active material is expressed as a negative electrode active material, a second electrode active material is expressed as a negative electrode active material, a 1-1 electrode is expressed as a first negative electrode, and a 1-2 electrode is expressed as a second negative electrode. In addition, a single-sided electrode is expressed as a single-sided negative electrode, a double-sided electrode is expressed as a double-sided positive electrode, and an insulation-coated electrode is expressed as an insulation-coated negative electrode. However, this is for convenience of description, and the present invention is not limited thereto. The negative electrode and the positive electrode may be interchangeable.

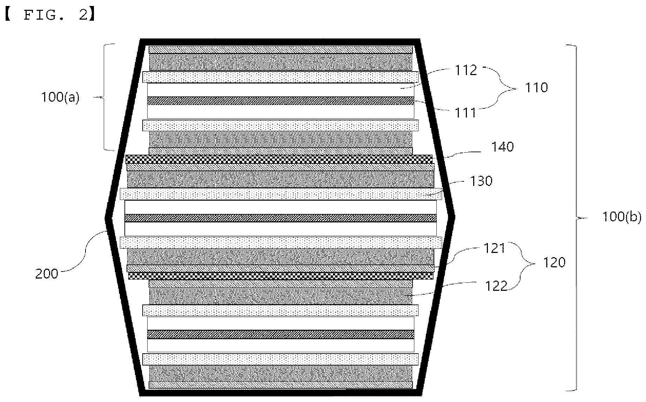

FIG. 2 is a schematic side view of a pouch-shaped secondary battery according to the present invention.

The pouch-shaped secondary battery according to the present invention includes a stacked type electrode assembly 100(b) including two or more intermediate assemblies 100(a), each of which is configured to have a structure in which a positive electrode 110, a separator 130, and a negative electrode 120 are stacked, and a case 200 configured to receive the stacked type electrode assembly 100(b) therein, wherein the case is configured to have a structure in which the width of a central portion of the case is greater than the width of each of the upper surface and the lower surface of the case.

The positive electrode 110 includes a positive electrode active material layer 112 applied to at least one surface of a positive electrode current collector 111. In order to form an intermediate assembly 100(a), as in the present invention, however, it is preferable for the positive electrode 110 according to the present invention to be a double-sided positive electrode having a positive electrode active material layer 112 provided on opposite surfaces of the positive electrode current collector 111. The positive electrode active material layer 112 may be manufactured by applying a positive electrode mixture of a positive electrode active material, a conductive agent, and a binder. A filler may be further added to the positive electrode mixture as needed.

In general, the positive electrode current collector 111 is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The positive electrode current collector 111 may have a micro-scale uneven pattern formed on the surface thereof so as to increase the force of adhesion to the positive electrode active material layer 112. The positive electrode current collector may be configured in any of various forms, such as a film, a sheet, a foil, a net, a porous body, a foam body, or a non-woven fabric body.

In addition to the positive electrode active material particles, the positive electrode active material may be constituted, for example, by a layered compound, such as a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

The conductive agent is generally added so that the conductive agent accounts for 0.1 to 30 weight% based on the total weight of the compound including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive material, such as a polyphenylene derivative, may be used as the conductive agent.

The binder, which is included in the positive electrode 110, is a component assisting in binding between the active material and the conductive agent and in binding with the current collector. The binder is generally added in an amount of 0.1 to 30 weight% based on the total weight of the compound including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylenepropylene-diene terpolymer (EPDM), sulfonated EPDM, styrene butadiene rubber, fluoro rubber, and various copolymers.

The negative electrode 120 is manufactured by applying a negative electrode active material to only one surface of a negative electrode current collector 121 and drying the same, whereby a negative electrode active material layer 122 is provided at one surface of the negative electrode. The above-described components may be selectively further included as needed.

Since the negative electrode 120 is provided as a single-sided negative electrode having a negative electrode active material layer 122 provided at only one surface of a negative electrode current collector 121, the space of the pouch-shaped secondary battery occupied by the negative electrode 120 is reduced, whereby the capacity of the pouch-shaped secondary battery is increased.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), or SnₓMe₁₋ₓMe'_{y}O_{z} (Me: Mn, Fe, Pb, Ge; Me': Al, B, P, Si, Group 1, 2 and 3 elements of the periodic table, halogen; 0<x≤1; 1≤y≤3; 1≤z≤8); lithium metal; lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

The separator 130 is interposed between the positive electrode 110 and the negative electrode 120, and an insulative thin film that exhibits high ion permeability and mechanical strength is used as the separator. The separator 130 generally has a pore diameter of 0.01 µm to 10 µm and a thickness of 5 µm to 300 µm. As the material for the separator 130, for example, a sheet or non-woven fabric made of an olefin-based polymer, such as polypropylene, which exhibits chemical resistance and hydrophobicity, glass fiber, or polyethylene is used. In the case in which a solid electrolyte, such as a polymer, is used as an electrolyte, the solid electrolyte may also function as the separator 130.

Each intermediate assembly 100(a) or the stacked type electrode assembly 100(b) may be a stacked type assembly constituted by unit cells, each of which is configured to have a structure in which a rectangular positive electrode 110 and a rectangular negative electrode 120 are stacked in the state in which a separator 130 is interposed therebetween, or a laminated/stacked type assembly, which is configured to have a structure in which unit cells are stacked so as to be attached to each other in the state in which a separator 130 is interposed between therebetween, but the present invention is not limited thereto. However, it is preferable for each intermediate assembly 100(a) or the stacked type electrode assembly 100(b) not to be a jelly-roll type assembly, which is configured to have a structure in which a long sheet type positive electrode and a long sheet type negative electrode are wound in the state in which a separator is interposed therebetween, or a stacked and folded type assembly, which is configured to have a structure in which unit cells are wound using a long separation film, which reduces impregnability of an electrolytic solution.

At this time, each intermediate assembly 100(a) may have a structure in which a single-sided negative electrode 120/ a separator 130/ a double-sided positive electrode 110/ a separator 130/ a single-sided negative electrode 120 are stacked.

In the case in which the single-sided negative electrodes 120 are used in each intermediate assembly 100(a), as described above, the thickness of the intermediate assembly 100(a) is reduced, whereby it is possible to minutely adjust the size of the intermediate assembly 100(a), which is advantageous in maintaining overall balance of the stacked type electrode assembly 100(b).

The positive electrode 110, the negative electrode 120, and the separator 130 in each intermediate assembly 100(a) may have the same sizes, and the intermediate assemblies 100(a) may have different sizes in the stacked type electrode assembly 100(b). That is, the size of each intermediate assembly 100(a) may be changed depending on the width or shape of the case 200.

In order to form the stacked type electrode assembly 100(b), an insulation film 140 may be provided between the intermediate assemblies 100(a). The insulation film 140 is disposed at a position at which the intermediate assemblies 100(a) face each other in order to perform an insulation function.

Alternatively, an insulation-coated negative electrode having a negative electrode active material layer 122 applied to one surface of a negative electrode current collector 121 and the other surface coated with an insulation material may be used as the negative electrode 120, instead of using the insulation film 140.

In this case, the surface of the insulation-coated negative electrode having the negative electrode active material applied thereto, i.e. the negative electrode active material layer 122, may be disposed so as to face the positive electrode 110 in each intermediate assembly 100(a).

That is, in the intermediate assembly 100(a), a first negative electrode/ a separator 130/ a positive electrode 110/ a separator 130/ a second negative electrode may be stacked, and both the first negative electrode and the second negative electrode may be insulation-coated negative electrodes. Alternatively, the first negative electrode may be an insulation-coated negative electrode, and the second negative electrode may be a single-sided negative electrode.

In the case in which the first negative electrode is an insulation-coated negative electrode and the second negative electrode is a single-sided negative electrode, it is preferable for the intermediate assemblies 100(a) to be stacked such that the first negative electrode and the second negative electrode have the same disposition.

The intermediate assemblies 100(a) and the stacked type electrode assembly 100(b) are received in the case 200, and the case 200 is generally configured to have a laminate sheet structure of an inner layer/ a metal layer/ an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and resistance to impact strength, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

The case 200 according to the present invention may be configured such that the width of a central portion of the case is greater than the width of each of the upper surface and the lower surface of the case. As an example of the case 200, the case may be a case having an upper case and a lower case, wherein the case may have a trapezoidal shape, in which the surfaces of the upper case and the lower case that come into contact with each other are widest.

In this case, the depth of the upper cup may be less than the depth of the lower cup. The reason for this is that it is necessary for the stacked type electrode assembly 100(b) to be stably received in the case 200 without collapsing.

In addition, it is preferable for the inclination of each cup relative to the bottom surface of the case 200 to be 120° to 160°. In the present invention, the bottom surface of the case 200 is a case surface of the upper cup or the lower cup at which the wide surfaces of the intermediate assemblies 100(a) and the stacked type electrode assembly 100(b) at which the electrodes and the separators are stacked face each other, and a case surface of the upper cup or the lower cup at which surfaces of the intermediate assemblies 100(a) and the stacked type electrode assembly 100(b), excluding the wide surfaces, face each other are a side surface of the case 200. Also, in the case 200 in which the intermediate assemblies 100(a) and the stacked type electrode assembly 100(b) are received, the inclination of each cup means the angle between the bottom surface of the case 200 and the side surface of the case 200, and the right angle between the bottom surface of the case 200 and the side surface of the case 200 located perpendicular thereto is omitted.

In the case in which the inclination of each cup relative to the bottom surface of the case 200 is equal to or less than 120°, a heat dissipation effect of the case 200 is reduced, and a capacity increase effect of the stacked type electrode assembly 100(b) received therein is also reduced. Also, in the case in which the inclination of each cup relative to the bottom surface of the case 200 is equal to or greater than 160°, a difference in size between the intermediate assemblies 100(a) in the case 200 may increase, whereby the stacked type electrode assembly 100(b) may be deformed due to external impact, etc.

The present invention provides a method of manufacturing a pouch-shaped secondary battery, the method including S1) a step of forming an intermediate assembly configured to have a structure in which a positive electrode, a separator, and a negative electrode are stacked, S2) a step of preparing a case configured to have a structure in which the width of a central portion of the case is greater than the width of each of the upper surface and the lower surface of the case, S3) a step of stacking intermediate assemblies having different widths so as to correspond to the width of the case to form a stacked type electrode assembly, and S4) a step of receiving the electrode assembly in the case.

After an intermediate assembly is formed, as described above, another intermediate assembly having a different width is stacked thereon to form a stacked type electrode assembly, whereby it is possible to form stacked type electrode assemblies having a uniform center of gravity. In addition, force of coupling between the positive electrode, the separator, and the negative electrode constituting each intermediate assembly may be increased to improve stability of the stacked type electrode assembly according to the present invention.

That is, even in the case in which the stacked type electrode assembly shakes due to external impact and thus the stacked type electrode assembly is deformed, each intermediate assembly having higher coupling force returns to the initial state thereof through coupling. As a result, performance of the battery may be little affected.

In the case in which external impact is applied to the intermediate assembly, which has high force of coupling between the electrode and the separator, deformation of the intermediate assembly is relatively small, compared to the stacked type electrode assembly. Consequently, the initial state of the intermediate assembly may be maintained, and therefore the effect of external impact on performance of the secondary battery may be minimal.

At this time, in order to increase the capacity of the pouch-shaped secondary battery according to the present invention while minimizing the size thereof, a single-sided negative electrode having a negative electrode active material applied to only one surface of a current collector may be used as the negative electrode, and a double-sided positive electrode having a positive electrode active material applied to opposite surfaces of a current collector may be used as the positive electrode. In the present invention, an intermediate assembly configured to have a structure in which a single-sided negative electrode/ a separator/ a double-sided positive electrode/ a separator/ a single-sided negative electrode are stacked may be used.

In addition, an insulation film may be provided between the intermediate assemblies, as previously described, or an insulation-coated negative electrode may be used.

The present invention may provide a battery module or a battery pack including the pouch-shaped secondary battery having at least one of the above-described features.

In addition, the present invention may provide a device having the pouch-shaped secondary battery mounted therein.

The device may be an electronic device including a large-capacity battery, such as an electric vehicle, a hybrid electric vehicle, or a plug-in hybrid electric vehicle.

Those skilled in the art to which the present invention pertains will appreciate that various applications and modifications are possible within the category of the present invention based on the above description.

### (Description of Reference Symbols)

10: Electrode assembly
100(a): Intermediate assembly
100(b): Stacked type electrode assembly
11, 110: Positive electrodes
11(a), 111: Positive electrode current collectors
11(b), 112: Positive electrode active material layers
12, 120: Negative electrodes
12(a), 121: Negative electrode current collectors
12(b), 122: Negative electrode active material layers
13, 130: Separators
140: Insulation film
20, 200: Cases

### [Industrial Applicability]

As is apparent from the above description, a pouch-shaped secondary battery according to the present invention includes a stacked type electrode assembly configured not to be wrapped by a separation film, thus having high impregnability, a case configured to receive the stacked type electrode assembly is configured such that the width of a central portion of the case is greater than the width of each of the upper surface and the lower surface of the case, and stacking of the electrode assembly is performed based on the size of the case, whereby the capacity of the pouch-shaped secondary battery according to the present invention is greater than the capacity of a conventional pouch-shaped secondary battery.

In addition, since the width of the central portion of the case is greater than the width of each of the upper surface and the lower surface of the case, a heat dissipation effect is also excellent.

Furthermore, the present invention has an advantage in that, in the case in which intermediate assemblies are formed and stacked, the shape of the electrode assembly is maintained even though the electrode assembly is not fixed using a separate separation film.

## Claims

1. A pouch-shaped secondary battery comprising:
a stacked type electrode assembly comprising two or more intermediate assemblies, each of which is configured to have a structure in which a first electrode, a separator, and a second electrode are stacked; and
a case configured to receive the stacked type electrode assembly therein, wherein
the case is configured to have a structure in which a width of a central portion of the case is greater than a width of each of an upper surface and a lower surface of the case.

2. The pouch-shaped secondary battery according to claim 1, wherein the first electrode is a single-sided electrode having a first electrode active material applied to only one surface of a current collector, and
wherein the second electrode is a double-sided electrode having a second electrode active material applied to opposite surfaces of a current collector.

3. The pouch-shaped secondary battery according to claim 2, wherein each of the intermediate assemblies is configured to have a structure in which a single-sided electrode, a separator, a double-sided electrode, a separator, and a single-sided electrode are stacked.

4. The pouch-shaped secondary battery according to claim 3, wherein an insulation film is provided between the intermediate assemblies.

5. The pouch-shaped secondary battery according to claim 1, wherein the first electrode is an insulation-coated electrode having a first electrode active material applied to one surface of a current collector and the other surface coated with an insulation material, and
wherein the second electrode is a double-sided electrode having a second electrode active material applied to opposite surfaces of a current collector.

6. The pouch-shaped secondary battery according to claim 5, wherein each of the intermediate assemblies is configured to have a stacked structure in which the surface of the first electrode having the first electrode active material applied thereto faces the second electrode.

7. The pouch-shaped secondary battery according to claim 6, wherein each of the intermediate assemblies is configured to have a structure in which a 1-1 electrode/ a separator/ a second electrode/ a separator/ a 1-2 electrode are stacked, and
wherein each of the 1-1 electrode and the 1-2 electrode is an insulation-coated electrode.

8. The pouch-shaped secondary battery according to claim 6, wherein each of the intermediate assemblies is configured to have a structure in which a 1-1 electrode/ a separator/ a second electrode/ a separator/ a 1-2 electrode are stacked,
wherein the 1-1 electrode is an insulation-coated electrode, and
wherein the 1-2 electrode is a single-sided electrode having a first electrode active material applied to only one surface of a first electrode current collector.

9. The pouch-shaped secondary battery according to claim 1, wherein the stacked type electrode assembly is configured such that the intermediate assemblies have different sizes depending on the width of the case.

10. A method of manufacturing a pouch-shaped secondary battery, the method comprising:
S1) forming an intermediate assembly configured to have a structure in which a first electrode, a separator, a second electrode, a separator, and a first electrode are stacked;
S2) preparing a case configured to have a structure in which a width of a central portion of the case is greater than a width of each of an upper surface and a lower surface of the case;
S3) stacking intermediate assemblies having different widths so as to correspond the width of the case to form a stacked type electrode assembly; and
S4) receiving the electrode assembly in the case.

11. The method according to claim 10, wherein the first electrode is a single-sided electrode having a first electrode active material applied to only one surface of a current collector, and
wherein the second electrode is a double-sided electrode having a second electrode active material applied to opposite surfaces of a current collector.

12. The method according to claim 10, wherein, in step S3), an insulation film is provided between the intermediate assemblies.
